# FASCICULE DE BREVET EUROPEEN

(11) **EP 2 717 040 B1**
(45) Date de publication et mention de la délivrance du brevet: **27.03.2019**
(21) Numéro de dépôt: 13306359.4
(22) Date de dépôt: 01.10.2013
(51) Int. Cl.: G01N 27/12, B82Y 30/00, B82Y 15/00

(54) **Dispositif de détection et/ou de quantification du chlorure de thionyle, son procédé de fabrication et procédé de détection et/ou de quantification du chlorure de thionyle**
Vorrichtung zum Nachweis und/oder zur Quantifizierung von Thionylchlorid, ihr Herstellungsverfahren und Nachweis- und/oder Quantifizierungsverfahren von Thionylchlorid
Device for detecting and/or quantifying thionyl chloride, method for manufacturing same and method for detecting and/or quantifying thionyl chloride

(30) Priorité: 02.10.2012 FR 1259331
(43) Date de publication de la demande: 09.04.2014
(73) Titulaire: COMMISSARIAT À L'ÉNERGIE ATOMIQUE ET AUX ÉNERGIES ALTERNATIVES, 75015 Paris (FR)
(72) Inventeur: Berrebi, Mickaël, 95570 Bouffemont (FR); Chenevier, Pascale, 38700 La Tronche (FR); Mayne-L'Hermite, Martine, 91470 Les Molières (FR)
(74) Mandataire: Gevers & Orès

(56) Documents cités:
- EP-A1- 2 154 525
- EP-A2- 1 736 760
- US-A1- 2007 048 181
- CHANG YOUNG LEE ET AL: "Amine Basicity (pKb ) Controls the Analyte Binding Energy on Single Walled Carbon Nanotube Electronic Sensor Arrays", JOURNAL OF THE AMERICAN CHEMICAL SOCIETY, vol. 130, no. 5, 12 janvier 2008 (2008-01-12), pages 1766-1773, XP055066915, ISSN: 0002-7863, DOI: 10.1021/ja0776069

## Description

L'invention concerne un dispositif de détection et/ou de quantification du chlorure de thionyle ainsi qu'un procédé de détection et/ou de quantification du chlorure de thionyle.

Elle concerne également un procédé de fabrication de ce dispositif de détection et/ou quantification du chlorure de thionyle.

Le chlorure de thionyle, de formule SOCl₂, est un réactif majeur de l'industrie chimique. C'est un agent chlorant largement utilisé dans la synthèse organique industrielle pour la préparation de chlorures d'acyle en particulier. Ces chlorations sont des étapes fréquentes dans la synthèse de médicaments, vitamines, colorants ou herbicides. Le chlorure de thionyle entre également dans la composition des piles au lithium Li/SOCl₂ largement utilisées en milieu professionnel pour leur grande longévité et leur efficacité sur des plages de température étendue (jusqu'à -55°C). La production mondiale de chlorure de thionyle est de plusieurs dizaines de milliers de tonnes par an.

Il s'agit d'un liquide volatile corrosif dont les vapeurs sont toxiques.

D'après l'INERIS, le seuil de toxicité (effets irréversibles) à 10 min et 1 h d'exposition se situe à 140 et 77ppm (2009). Aux Etats-Unis, le seuil de toxicité (effets irréversibles) AEGL-2 est évalué pour une exposition de 10min et 1h à 4,3ppm et 2,4ppm, le seuil équivalent ERPG-2 est évalué à 2ppm pour une exposition d'1h (2008). Or la tension de vapeur saturante du chlorure de thionyle est de 11kPa à 20°C et 16kPa à 25°C, équivalant à une teneur de 116 000 ppm et 160 000 ppm. Pour limiter les risques d'exposition aux vapeurs des personnes en contact avec ce réactif ou ses produits dérivés comme les batteries Li/SOCl₂, il est donc important de disposer de systèmes de détection rapides, sensibles et sélectifs.

Divers types de détecteurs de gaz toxiques sont disponibles commercialement ou ont été décrits dans la littérature, mais peu d'études montrent des tests de détection du chlorure de thionyle.

Certains systèmes de détection peuvent identifier de nombreuses espèces chimiques différentes avec un appareil portable, comme la spectroscopie IMS (spectrométrie de mobilité d'ions) et la photométrie de flamme. Mais ces techniques analytiques ne sont adaptées qu'à des analyses ponctuelles comme la recherche de toxiques, stupéfiants ou explosifs lors d'investigations ou d'analyse ponctuelle de la qualité de l'air, à cause de la forte consommation énergétique et du coût élevé des appareils. De façon générale, ces techniques sont très sensibles mais pas du tout sélectives, un polluant peut donc cacher le signal du composé que l'on cherche à détecter.

Les capteurs de gaz, en revanche, visent à détecter une seule espèce chimique avec un dispositif très petit, peu coûteux et fonctionnant sur de longues périodes. Dans ce cas, le dispositif n'effectuant aucune séparation chimique, l'identification de la substance doit être assurée par la sélectivité du capteur. Différents dispositifs ont montré de bonnes sensibilités de détection : capteurs à résistance métallique, capteurs à ondes acoustiques de surface (SAW pour Surface Acoustic Wave en anglais), capteurs à luminescence, capteurs électriques à nanofils, graphène ou, comme dans l'exemple de la présente invention, à nanotubes de carbone (NTC).

En général, un capteur de gaz est intrinsèquement sensible à des taux de gaz à détecter très bas (de quelques ppm à quelques ppb), mais la réponse est identique pour une série de substances chimiques différentes. Par exemple, les capteurs de gaz résistifs à nanotubes de carbone détectent indifféremment le méthane, l'ammoniac, le dioxyde d'azote, la diméthylformamide, le chlorure de thionyle... avec une sensibilité de l'ordre du 1ppm comme illustré dans C.Y. Lee, M. S. Strano, Journal of the American Chemical Society 2008, 5, 1766.

Pour obtenir une réponse sélective, le capteur doit présenter une fonctionnalisation chimique assurant une réponse très supérieure pour le gaz d'intérêt en comparaison à la réponse aux polluants comme, par exemple, dans le brevet français n°2 936 604.

En réalité, deux équipes seulement font état de tests de détection du chlorure de thionyle.

L'équipe de M. Strano dans C.Y. Lee, S. Baik, J. Zhang, R. I. Masel, M. S. Strano, Journal of Physical Chemistry B 2006, 110, 11055, a décrit la détection du chlorure de thionyle à 3ppm par un détecteur résistif à nanotubes de carbone monoparois sans fonctionnalisation chimique. Malgré la sensibilité affichée, ce type de dispositif est connu pour détecter de nombreuses substances chimiques comme indiqué ci-dessus. La détection ne permet donc pas l'identification de la substance émise.

La même équipe a décrit en 2008 dans C.Y. Lee, M. S. Strano, Journal of the American Chemical Society 2008, 5, 1766, la détection du chlorure de thionyle à 0,7ppb par un détecteur résistif à nanotubes de carbone monoparois fonctionnalisés par une couche de polyéthylènimine. Cependant, la reproductibilité de la détection est mal assurée, certains dispositifs répondant au gaz par une augmentation de résistance, d'autres par une diminution, la limite de détection étant variable d'un dispositif à l'autre (0,1 à 15ppb). De plus, la sélectivité n'est pas démontrée, en particulier vis-à-vis de substances concurrentes comme le dichlore et l'acide chlorhydrique et même vis-à-vis de la vapeur d'eau de l'atmosphère.

Greg Frye-Mason, Martin Leuschen, Lara Wald, Kateri Paul, and Lawrence F. Hancock, Proc. SPIE 5778, 337 (2005); doi: 10.1117/12.604134, ont, quant à eux, publié une étude sur un capteur luminescent de gaz de guerre organophosphorés faisant mention du chlorure de thionyle. Le capteur est sélectif des gaz organophosphorés mais ne répond pas au chlorure de thionyle.

Par ailleurs, l'équipe de J.-P. Simonato a décrit, dans le brevet EP 2 154 525, un capteur de gaz à nanotubes de carbone ou nanofils de silicium comportant une fonctionnalisation avec une molécule comprenant une fonction alcool à proximité spatiale d'une fonctionnalisation amine.

Cependant, ce capteur permet de détecter des gaz de guerre organophosphorés, et aucun test de détection de toxiques industriels ou du chlorure de thionyle n'est mentionné.

De plus la fonctionnalisation des nanotubes ou des nanofils est effectuée avec une molécule sonde comportant, sur la même molécule, un groupement alcool et un groupement amine, ce qui rend la réalisation de la fonctionnalisation difficile et coûteuse.

L'équipe de M. Mayne, dont certains coinventeurs de la présente invention font partie, a démontré, aussi dans A. Gohier, J. Chancolon, P. Chenevier, D. Porterat, M. Mayne-L'Hermite, C. Reynaud, Nanotechnology 2011, 22, 105501, et dans le brevet français n°2 936 604, la sensibilité de capteurs résistifs à nanotubes de carbone. Ce document décrit la préparation et la fonctionnalisation de capteurs de gaz toxiques industriels. Le chlorure de thionyle est mentionné sans, toutefois, qu'aucune démonstration ne soit apportée dans les exemples. La fonctionnalisation décrite dans ce document comporte un seul groupement chimique susceptible de reconnaître le gaz toxique d'intérêt.

Cependant, la grande sensibilité ainsi que la sélectivité pour le chlorure de thionyle doivent encore être améliorées. En effet, les capteurs de gaz fabriqués avec une couche de sensibilisation comportant seulement une seule molécule avec un seul groupement chimique ont une sensibilité très réduite au chlorure de thionyle, et ne sont pas sélectifs.

Ainsi, il existe à l'heure actuelle un besoin pour un détecteur spécifique du chlorure de thionyle, qui soit sensible, rapide et bon marché.

A cet effet, l'invention propose un dispositif de détection et/ou de quantification du chlorure de thionyle (SOCl₂) comprenant au moins deux électrodes source, et une couche en un matériau conducteur ou semi-conducteur caractérisé en ce qu'il comprend de plus une couche de sensibilisation, comprenant un mélange d'au moins un premier composé A ayant une fonction hydroxyle et d'au moins un second composé B ayant une fonction amine, déposée sur au moins une des électrodes et/ou sur le matériau semi-conducteur.

De préférence, dans le dispositif de l'invention, le rapport molaire composé A/composé B est compris entre 0,1 et 10 inclus. De préférence, il est égal à 1.

En tant que premier composé A, on le choisira, de préférence, parmi les alcools primaires, de préférence le n-octadécanol; les alcools secondaires, de préférence l'alpha-vinyl benzylalcool (VBA), ou le phényl-1-propanol; les alcools tertiaires, de préférence le terpinéol, les phénols, de préférence l'hydroquinone.

En tant que second composé B, on le choisira, de préférence, parmi les polymères à fonction amine, de préférence la poly(2-vinylpyridine) (P2VP), la poly(4-vinylpyridine), les copolymères de vinyl-pyridine et styrène, la poly(éthylène imine).

La couche de sensibilisation a une épaisseur comprise entre 10nm et 100µm, de préférence égale à 100nm.

Le matériau conducteur ou semi-conducteur peut être choisi parmi les matériaux à base de carbone, silicium, germanium, zinc, gallium, indium, cadmium et les matériaux semi-conducteurs organiques. De préférence le matériau est constitué de nanotubes de carbone. Plus préférablement les nanotubes de carbone sont des nanotubes de carbone multiparois qui sont conducteurs.

Le matériau des électrodes peut être choisi parmi l'or, l'argent, le palladium, le platine, le titane, le silicium dopé, le cuivre et le nickel. De préférence les électrodes sont en or.

L'invention propose aussi un procédé de détection et/ou de quantification du chlorure de thionyle, caractérisé en ce qu'il comprend une étape de mise en présence de l'échantillon à tester sous forme liquide ou sous forme gazeuse avec un dispositif de détection et/ou de quantification selon l'invention, et une étape de mesure de la résistance, de la conductance, de la transconductance, de l'impédance et/ou de la capacité dudit dispositif.

L'invention propose également un procédé de fabrication d'un dispositif de détection et/ou de quantification du chlorure de thionyle comprenant au moins deux électrodes et une couche en un matériau conducteur ou semi-conducteur, caractérisé en ce qu'il comprend les étapes suivantes :
a) mélange d'au moins un composé A ayant une fonction hydroxyle et d'au moins un second composé B ayant une fonction amine,
b) dépôt du mélange obtenu à l'étape a) sur la surface d'au moins l'une des électrodes et/ou sur le matériau conducteur ou semi-conducteur, et
c) séchage de la couche obtenue à l'étape b).

De préférence, dans le procédé de l'invention, à l'étape a), le rapport molaire composé A/composé B est compris entre 0,1 et 10 inclus, de préférence est égal à 1.

De préférence, dans le procédé de l'invention, le composé A est choisi parmi les alcools primaires, de préférence le n-octadécanol; les alcools secondaires, de préférence l'alpha-vinyl benzylalcool (VBA), ou le phényl-1-propanol; les alcools tertiaires, de préférence le terpinéol; les phénols, de préférence l'hydroquinone.

Dans le procédé de l'invention, de préférence, le second composé est choisi parmi les polymères à fonction amine, de préférence la poly(2-vinylpyridine) (P2VP), la poly(4-vinylpyridine), les copolymères de vinyl-pyridine et styrène, la poly(éthylène imine).

Toujours dans le procédé de l'invention la couche obtenue au final a une épaisseur comprise entre 10nm et 100µm, de préférence égale à 100nm.

Le matériau conducteur ou semi-conducteur peut être choisi parmi les matériaux à base de carbone, silicium, germanium, zinc, gallium, indium, cadmium et les matériaux semi-conducteurs organiques. De préférence le matériau est constitué de nanotubes de carbone. Plus préférablement les nanotubes de carbone sont des nanotubes de carbone multiparois qui sont conducteurs.

Le matériau des électrodes peut être choisi parmi l'or, l'argent, le palladium, le platine, le titane, le silicium dopé, le cuivre et le nickel. De préférence les électrodes sont en or.

Selon un mode de mise en oeuvre préféré du procédé de l'invention, à l'étape a), le mélange du au moins un composé A et du au moins un composé B est effectué dans un solvant, de préférence le chloroforme.

Quant au dépôt de l'étape b), il peut être effectué un dépôt par enduction, trempage, gouttage, ou par évaporation.

De préférence, le procédé de l'invention comprend, de plus, une étape d) de lavage de la couche obtenue à l'étape c), suivie d'une étape e) de recuit entre 40 et 250°C, de préférence à 100 °C, pendant 1 seconde à 1 heure, de préférence 5 minutes, de la couche obtenue à l'étape d).

L'invention sera mieux comprise et d'autres caractéristiques et avantages de celle-ci apparaîtront plus clairement à la lecture de la description explicative qui est faite en référence aux figures annexées dans lesquelles :

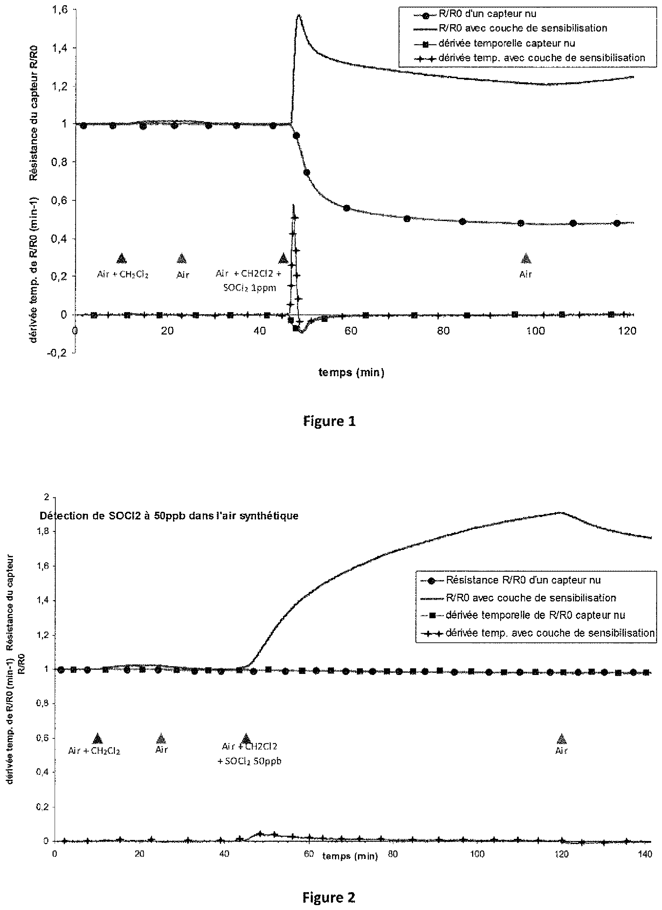

- la figure 1 représente les courbes de variation de la résistance relative dans un capteur ne comportant pas de couche de sensibilisation (art antérieur) et d'un capteur comportant une couche de sensibilisation (selon l'invention), lors de leur exposition à de l'air synthétique comprenant 1ppm de chlorure de thionyle sous forme vapeur. En figure 1, les courbes supérieures montrent l'évolution dans le temps de la résistance du capteur (normalisée à la résistance initiale R/R0) et les courbes inférieures montrent la dérivée temporelle de R/R0,
- la figure 2 montre les courbes de variation de la résistance relative à un capteur ne comportant pas de couche de sensibilisation (art antérieur) et d'un capteur comportant une couche de sensibilisation (selon l'invention), lors de leur exposition à de l'air synthétique comprenant 50ppb de chlorure de thionyle sous forme vapeur. En figure 2, les courbes supérieures montrent l'évolution dans le temps de la résistance du capteur (normalisée à la résistance initiale R/R0) et les courbes inférieures montrent la dérivée temporelle de R/R0,

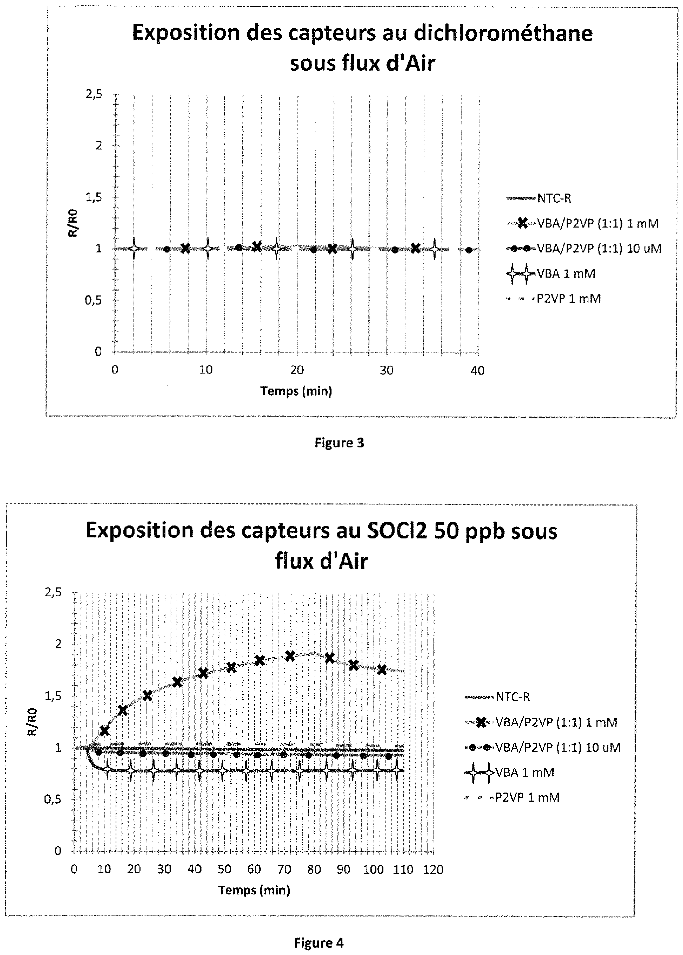

- la figure 3 montre la courbe de la variation de la résistance relative (R/R0) :
   - d'un capteur ne comprenant pas de couche de sensibilisation, notée NTC-R,
   - d'un capteur comprenant une couche de sensibilisation comprenant uniquement des molécules ayant une seule fonction, une fonction amine, notée P2VP 1mM,
   - d'un capteur comprenant une couche de sensibilisation ne comprenant qu'une seule molécule ayant une seule fonction hydroxyle, notée VBA 1mM,
   - d'un capteur comprenant une couche de sensibilisation comprenant deux molécules, selon l'invention, mais dont la couche de sensibilisation est trop fine, notée VBA/P2VP (1:1) 10 µM, et
   - d'un capteur, selon l'invention, avec une couche de sensibilisation comprenant les deux composés A et B, selon l'invention, et ayant une épaisseur suffisante, notée VBA/P2VP (1:1) 1 mM,
   lors d'une exposition à un flux de 200ppm de dichlorométhane sous flux d'air synthétique,
- la figure 4 représente la variation de résistance relative (R/R0) des mêmes capteurs qu'à la figure 3 mais lors d'une exposition à un flux d'air contenant 50 ppb de chlorure de thionyle et 200ppm de dichlorométhane, sous flux d'air à 300mL/min,

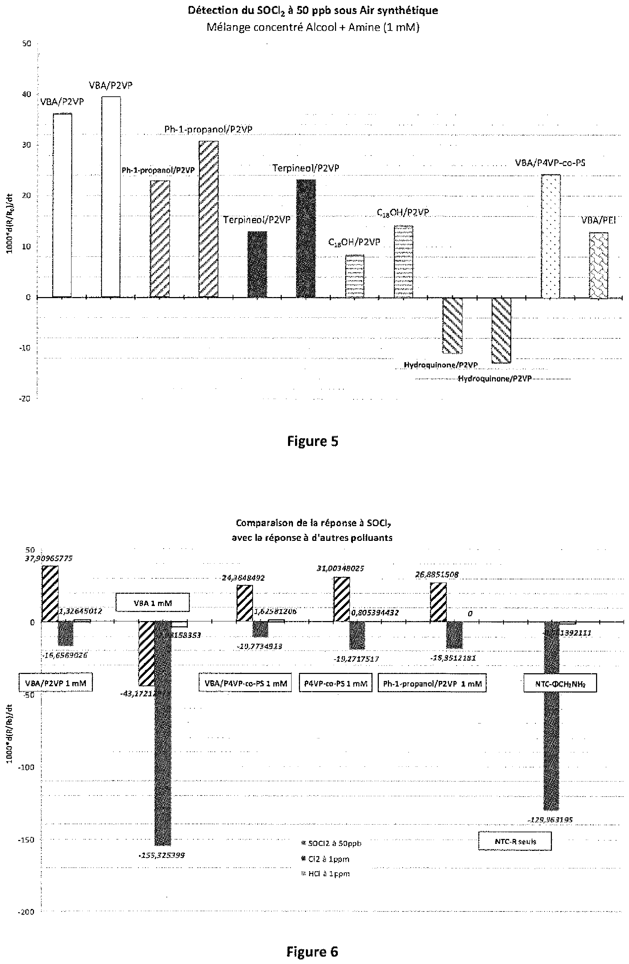

- la figure 5 montre les hauteurs des pics de détection de capteurs selon l'invention ayant des couches de sensibilisation dans lesquelles le composé A et le composé B sont présents pour la détection de 50 ppb de SOCl₂ dans de l'air synthétique. Les composés A et les composés B sont dissous à une concentration de 1 mM dans du chloroforme et 25 µL de solution sont déposés sur le capteur (les électrodes et le matériau conducteur étant recouverts) puis séchés pour évaporer le chloroforme,
- la figure 6 montre la hauteur des pics de détection pour la détection de 50 ppb de SOCl₂ dans l'air synthétique (zone hachurée), la détection de 1 ppm de Cl₂ dans l'azote (zone noire) et la détection de 1 ppm de HCl dans l'azote (zone blanche), pour différentes compositions de couches de sensibilisation déposées pour obtenir des capteurs selon l'invention, et

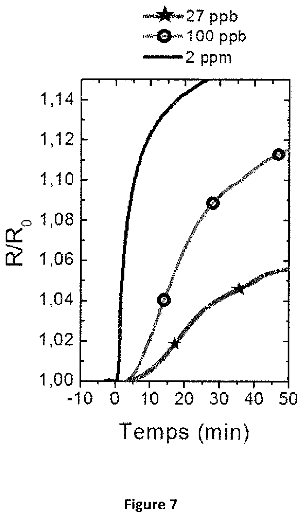

- la figure 7 montre les courbes de variation de la résistance relative d'un capteur comprenant une couche de sensibilisation ne comprenant qu'un composé B (polyéthylènimine) lors de son exposition à 27 ppb, 100 ppb et 2 ppm de Cl₂.

Le capteur de l'invention est un dispositif de détection et/ou de quantification du chlorure de thionyle, SOCl₂, qui est spécifique, c'est-à-dire sélectif du chlorure de thionyle et qui permet de détecter des quantités de chlorure de thionyle dans l'air inférieures à 50 ppb en moins de 3 minutes de façon reproductible, à température ambiante.

Le dispositif de détection et/ou de quantification du chlorure de thionyle de l'invention est sélectif en ce qu'il n'est sensible ni au chlore gazeux (Cl₂) ni à l'acide chlorhydrique, ni au dichlorométhane.

Le dispositif de détection et/ou de quantification de l'invention est un dispositif qui comprend au moins deux électrodes source et une couche en un matériau conducteur ou semi-conducteur.

Ce dispositif peut être un transistor, auquel cas le matériau est un matériau semi-conducteur et les électrodes sont reliées entre elles par la couche de ce matériau.

Ce dispositif peut également être un résisteur, plus communément désigné "resistor" en anglais, dans lequel le matériau est un matériau conducteur et les électrodes sont reliées entre elles par la couche de ce matériau.

Mais ce dispositif peut encore être un condensateur dans lequel la couche de matériau conducteur ou semi-conducteur est en un matériau semi-conducteur et est placée entre les deux électrodes mais séparée de celles-ci par une couche en un matériau isolant polarisable. Dans ce cas, c'est la variation de capacité de l'électrode recouverte de la couche de sensibilisation qui est mesurée.

Les électrodes que comprend le dispositif selon la présente invention sont constituées d'une matière conductrice ou semi-conductrice. Lesdites électrodes sont en un quelconque métal ou matériau métallique, de préférence choisi dans le groupe constitué par Au, Pd, Pt, Al, Cr, Ni, Ti, ITO, W et acier, en un matériau multicouche ou en un matériau composite métal/matériau métallique tel que Ti/Au, Cr/Au, Ti/Pd ou Ti/Au.

Les électrodes peuvent également être d'une quelconque forme permettant de mettre en oeuvre la présente invention. Avantageusement, les électrodes mises en oeuvre dans le dispositif de l'invention présentent une configuration en peigne interdigité, en spirale ou concentrique. De façon préférée, les électrodes que comprend le dispositif selon l'invention présentent une configuration en peigne interdigité avantageusement comprenant, pour chaque électrode, au moins 3 bras, notamment au moins 5 bras et, en particulier, au moins 10 bras.

Toute technique connue de l'homme du métier permettant de préparer à la surface d'un support deux électrodes est utilisable dans le cadre de la présente invention. Toutefois, l'utilisation de nanotubes de carbone à plusieurs couches de graphène longs présentant, de façon avantageuse, une longueur supérieure ou égale à 20 µm, permet d'envisager des espacements inter-électrode importants. Avantageusement, ces espacements sont compris entre 1 et 300 µm ; notamment compris entre 5 et 200 µm ; en particulier, supérieurs à 20 µm et, plus particulièrement, supérieurs à 50 µm. Ceci permet d'avoir accès à des techniques simples et relativement peu coûteuses pour l'élaboration des électrodes comme les techniques de dépôt sous vide de métaux par exemple par thermo-évaporation, par plasma (ou PECVD pour « Plasma-Enhanced chemical Vapor Déposition ») ou par pulvérisation.

A titre d'exemple de procédé de préparation des électrodes du dispositif selon la présente invention, ces dernières sont préalablement déposées sur une lame en verre dans une chambre d'évaporation. Elles sont constituées d'un empilement de deux couches minces : une couche mince métallique reposant sur une couche d'accroche en chrome ou en titane de quelques nanomètres qui assure l'adhésion avec la surface du verre.

Le dispositif de l'invention comprend également un dispositif de détection de la variation de la résistance, de la conductance, de la transconductance, de l'impédance et/ou de la capacité entre les deux électrodes, selon qu'il s'agisse d'un transistor, d'un condensateur ou d'un résisteur.

La détection et/ou la quantification du chlorure de thionyle dans un gaz peut, en particulier, être effectuée en temps réel par un traitement du signal de résistance comme suit : la résistance relative R/R0 est calculée comme la résistance R du dispositif de l'invention lorsqu'en présence d'un gaz à tester ramenée à la résistance initiale RO de ce capteur en absence de chlorure de thionyle. Bien entendu, lorsque le gaz à analyser, c'est-à-dire suspecté de contenir du chlorure de thionyle, n'en contient pas, la résistance R est la résistance R0. La dérivée temporelle de R/R0 donne un pic lorsque le capteur est mis en présence d'un gaz contenant du chlorure de thionyle. La mesure de la hauteur de ce pic permet de quantifier la teneur en chlorure de thionyle dans le gaz à tester de façon plus précise et plus quantitative.

Pour obtenir une variation de la résistance relative ou de la conductance, de la transconductance, de l'impédance et/ou de la capacité, le dispositif de l'invention comprend de plus une couche supplémentaire déposée sur au moins l'une des électrodes, et/ou sur le matériau conducteur ou semi-conducteur, cette couche comprenant au moins un premier composé noté A qui comprend une fonction hydroxyle, et au moins une seconde molécule notée B comprenant une fonction chimique amine aliphatique ou aromatique ou un hétérocycle azoté, par exemple la pyridine, appelée dans la suite fonction amine.

Cette couche est appelée ici couche de sensibilisation. Ces deux composés sont en mélange dans la couche et la proximité des groupements hydroxyle et amine (ou pyridine) permet une réaction en plusieurs étapes entre le chlorure de thionyle et les molécules des deux types de la couche de sensibilisation. Cette réaction est rapide et permet, comme on l'a déjà dit, d'assurer la détection des vapeurs de chlorure de thionyle dans l'air à une concentration inférieure à 50 ppb en moins de 3 minutes de façon reproductible à température ambiante.

Un autre avantage du dispositif de l'invention est que les composés, c'est-à-dire le au moins un premier composé A et le au moins un second composé B peuvent être choisis parmi des composés commerciaux et ne nécessite aucune synthèse spécifique, rendant le coût unitaire du dispositif de l'invention très bas à fabriquer. Enfin, la couche de sensibilisation peut être facilement et rapidement adaptée pour un usage précis en faisant varier les paramètres du mélange comme la proportion des deux composés actifs et la présence éventuelle d'autres substances telles que le solvant, la matrice ou autre.

Les deux composés A et B peuvent être de petites molécules ou des polymères ou encore des co-polymères.

Le composé A comporte une fonction hydroxyle. Il est de préférence choisi parmi les alcools primaires comme le n-octadécanol, les alcools secondaires comme l'alpha-vinyl benzylalcool (VBA), et le phényl-1-propanol, les alcools tertiaires comme le terpinéol, les phénols, et comme l'hydroquinone.

Le composé B comporte une fonction amine. Il est de préférence choisi parmi les polymères comme la poly(2-vinylpyridine) (P2VP), la poly(4-vinylpyridine), les copolymères de vinyl-pyridine et styrène, la poly(éthylène imine).

Le rapport molaire composé A/composé B dans la couche de sensibilisation de l'invention est compris entre 0,1 et 10 inclus. Il est de préférence égal à 1.

L'épaisseur de la couche de sensibilisation doit être suffisamment fine pour ne pas obstruer le capteur et suffisamment épaisse pour le recouvrir complètement et diriger la sensibilité de la détection.

Cette épaisseur de la couche de sensibilisation est donc comprise entre 10nm et 100µm.

Elle est de préférence de 100nm.

Le matériau conducteur ou semi-conducteur est un matériau avantageusement à base de carbone, de silicium, de germanium, de zinc, de gallium, d'indium, de cadmium ou d'un matériau semi-conducteur organique.

De préférence, le matériau conducteur ou semi-conducteur est constitué de nanotubes de carbone, plus préférablement de nanotubes de carbone multiparois.

Dans le cas des matériaux semi-conducteurs organiques, ceux-ci peuvent être des oligomères, des polymères ou des petites molécules.

Par exemple, il peut s'agir de composés aromatiques hétérocycliques tels que les thiophènes et leurs dérivés, de préférence le poly-3-hexylthiophène (P3HT), ou les polypyrroles et leurs dérivés, les arylamines et leurs dérivés, de préférence la polytriarylamine (PTA), les isochroménones et leurs dérivés, des macrocycles hétérocycliques tels que les porphyrines, les phtalocyanines et leurs dérivés. Les matériaux semi-conducteurs organiques peuvent également être des acènes polycycliques aromatiques et leurs dérivés, de préférence l'anthracène ou le pentacène, des arylènes et leurs dérivés, par exemple le perylène, le polyparaphenylène, le polyparaphénylènevinylène ou le polyfluorène, des polysilanes et leurs dérivés.

Les électrodes peuvent être métalliques, par exemple en or, en argent, en palladium, en platine, en titane, en silicium dopé, en cuivre ou en nickel.

De préférence, elles sont en or.

L'invention propose également un procédé de détection et/ou quantification du chlorure de thionyle dans un gaz.

Ce procédé comprend une étape de mise en contact du dispositif de l'invention tel que décrit précédemment avec le gaz suspecté de contenir du chlorure de thionyle et une seconde étape de mesure de la variation de résistance, de la conductance, de la transconductance, de l'impédance et/ou de la capacité, entre les électrodes lors de cette mise en contact, selon le type de dispositif utilisé (résistif, capacitif, etc...).

Pour la quantification du chlorure de thionyle, une courbe d'étalonnage sera établie, en introduisant, dans le gaz suspecté de contenir du chlorure de thionyle, des quantités connues de chlorure de thionyle et en mesurant la variation de la résistance entre les électrodes du dispositif de l'invention détectée lors de ces divers ajouts.

L'invention propose également un procédé de fabrication du dispositif de détection et/ou de quantification de l'invention.

Le procédé de fabrication du dispositif de l'invention comprend les étapes suivantes :
a) mélange d'au moins un composé A ayant une fonction hydroxyle et d'au moins un second composé B ayant une fonction amine,
b) dépôt du mélange obtenu à l'étape a) sur la surface de l'une des électrodes et/ou sur la couche du matériau conducteur ou semi-conducteur, et
c) séchage de la couche obtenue à l'étape b).

Le premier composé A et le second composé B sont mélangés et dissous, soit l'un dans l'autre, soit dans un solvant. Un solvant préféré est le chloroforme. D'autres solvants permettant de stabiliser les composés A et B apparaîtront à l'homme de l'art en fonction de la nature des composés A et B. On peut citer, à titre d'exemples non limitatifs, l'acétone, l'acétonitrile, l'éthanol, l'isopropanol et le dichlorométhane.

Ils peuvent encore être mélangés dans une matrice, ou un mélange précurseur de la matrice, volatile. L'avantage de placer les composés A et B dans une matrice est de stabiliser la couche dans un polymère polymérisé in situ pendant ou après le dépôt pour une meilleure durabilité/processabilité/résistance chimique et mécanique. La concentration en polymères des composés A et B est calculée comme leur concentration équivalente en unité molaire. Ce mélange est déposé sur l'une des électrodes ou sur le matériau conducteur ou semi-conducteur en une couche mince du dispositif précédemment décrit.

Une couche d'une épaisseur comprise entre 10nm et 100µm, de préférence d'une épaisseur de 100nm est suffisante.

Le dépôt du mélange comprenant le composé A et le composé B peut être effectué par dépôt du mélange et évaporation du solvant ou séchage du mélange.

Il peut également être effectué par enduction, dépôt à la tournette, vaporisation, etc...

De préférence, le premier composé A est choisi parmi les alcools primaires, de préférence le n-octadécanol; les alcools secondaires, de préférence l'alpha-vinyl benzylalcool (VBA), ou le phényl-1-propanol; les alcools tertiaires, de préférence le terpinéol; les phénols, de préférence l'hydroquinone.

Quant au second composé B, il est de préférence choisi parmi les polymères à fonction aminé, de préférence la poly(2-vinylpyridine) (P2VP), la poly(4-vinylpyridine); les copolymères de vinyl-pyridine et styrène; la poly(éthylène imine).

Le matériau conducteur ou semi-conducteur est de préférence choisi parmi les matériaux à base de carbone, silicium, germanium, zinc, gallium, indium, cadmium et les matériaux semi-conducteurs organiques, de préférence le matériau est constitué de nanotubes de carbone, plus préférablement de nanotubes de carbone multiparois.

Le matériau des électrodes peut être l'or, l'argent, le palladium, le platine, le titane, le silicium dopé, le cuivre et le nickel. De préférence les électrodes sont en or.

Le procédé de fabrication du dispositif de l'invention peut de plus comprendre une étape d) de lavage de la couche obtenue à l'étape c), suivie d'une étape e) de recuit entre 40°C et 300°C, préférablement à 100°C pendant 1 seconde à 1 heure, préférablement 5 minutes de la couche obtenue à l'étape d).

Dans un mode de réalisation préféré, et qui est illustré dans les exemples qui suivent, le dispositif de l'invention comprend un réseau de nanotubes de carbone multiparois déposé entre deux électrodes d'or interdigitées sur un substrat isolant, typiquement en verre. Les nanotubes de carbone multiparois sont typiquement obtenus par synthèse par dépôt chimique en phase vapeur (CVD) d'aérosol comme décrit dans C. Castro, M. Pinault, S. Coste-Leconte, D. Porterat, N. Bendiab, C. Reynaud, M. Mayne-L'Hermite, Carbon 2010, 48 3807-3816, puis recuits sous atmosphère d'argon à 2000°C pendant 1 heure comme décrit dans A. Gohier, J. Chancolon, P. Chenevier, D. Porterat, M. Mayne-L'Hermite, C. Reynaud, Nanotechnology 2011, 22, 105501. Les nanotubes de carbone sont ensuite dispersés dans l'isopropanol, par exemple à l'aide d'une sonde à ultrasons. Ils sont ensuite déposés sur les électrodes ou le matériau semi-conducteur soit par évaporation de la suspension de NTC, c'est-à-dire séchage de quelques gouttes de solution déposées sur la surface, soit par diélectrophorèse, c'est-à-dire dépôt de quelques gouttes de solution sur les électrodes mises sous tension alternative de 10V, 5MHz jusqu'au séchage complet. Le dispositif de l'invention est ensuite lavé à l'eau distillée et recuit quelques minutes, c'est-à-dire entre 40°C et 300°C, à 100°C.

Les nanotubes de carbone que comprend le dispositif de la présente invention présentent une orientation sensiblement perpendiculaire vis-à-vis des deux électrodes. De plus, ces nanotubes sont disposés de façon homogène sur lesdites électrodes. Par « disposition homogène », on entend des nanotubes de carbone régulièrement répartis entre les électrodes avec peu ou pas d'amas de nanotubes.

Ainsi, l'utilisation d'une technique telle que la technique de diélectrophorèse pour disposer les nanotubes sur les électrodes conduit à une disposition homogène des nanotubes de carbone, préférentiellement orientés perpendiculairement entre les électrodes avantageusement interdigitées. Cette technique permet aussi de n'utiliser qu'une faible quantité de nanotubes de carbone pour assurer le contact entre les électrodes, ce qui réduit le coût de fabrication du dispositif et augmente la surface spécifique en contact avec l'air ambiant.

Le dispositif de l'invention comprend, en outre, des moyens permettant d'appliquer un courant électrique ou un potentiel donné aux électrodes et de contrôler la résistance du dispositif. Ces moyens comprennent avantageusement un ou plusieurs éléments choisis parmi
- une source électrique telle qu'une batterie,
- des moyens de connexion des électrodes à ladite source électrique tels qu'un circuit,
- des moyens de commande et des moyens de mesure afin de pouvoir régler, suivre et/ou contrôler le potentiel appliqué aux électrodes et/ou la résistance des nanotubes.

Afin de mieux faire comprendre l'invention, on va maintenant en décrire plusieurs modes de mise en oeuvre, à titre d'exemple purement illustratifs et non limitatifs.

### Exemple 1 (comparatif)

Un dispositif a été fabriqué selon le mode de réalisation préféré de l'invention en déposant un réseau de nanotubes de carbone multiparois entre deux électrodes d'or interdigitées sur un substrat de verre de 5x5 mm², avec une distance entre les électrodes de 100 µm, une largeur des électrodes 100µm, et une épaisseur d'or de 50 à 100 nm.

Ce dispositif ne comprend pas de couche de sensibilisation.

### Exemple 2 (selon l'invention)

On a procédé comme à l'exemple 1 puis on a déposé une couche de sensibilisation de 100 nm d'épaisseur comprenant de la poly(2-vinylpyridine) et du vinyl benzylalcool.

Pour cela, on a préparé 5 µL de solution de poly(2-vinylpyridine) et de vinyl benzylalcool à 1 mM chacun dans le chloroforme.

Cette couche est ensuite séchée par évaporation du chloroforme.

Cette couche est notée ici P2VP-VBA 1 mM.

### Exemple 3

On a exposé le dispositif obtenu à l'exemple 1 et le dispositif obtenu à l'exemple 2 à un flux d'air synthétique composé de 80% en volume de N₂ et 20% en volume de O₂, à température ambiante, ce flux d'air comprenant 1 ppm de vapeur de chlorure de thionyle.

Le flux de vapeurs est obtenu en faisant passer un flux d'air à 10 ml/min à la surface d'une solution de chlorure de thionyle en concentration variable de 0,001% à 100% en volume dans le dichlorométhane dans un flacon cylindrique fermé de 300 mL et de 4cm de diamètre.

Lorsque le flacon contient du chlorure de thionyle pur, la teneur en chlorure de thionyle dans l'air sortant est de 1 500 ppm environ.

Pour réduire cette teneur, on dilue le chlorure de thionyle du flacon dans du dichlorométhane sec. Par exemple, une solution à 1% en volume de chlorure de thionyle donne une teneur en chlorure de thionyle en sortie de 15 ppm. Une mesure par dosage acidobasique par barbotage du flux d'air sortant arrivant sur les dispositifs des exemples 1 et 2 donne une teneur en chlorure de thionyle de 17 ppm. D'autre part, on dilue le flux d'air sortant à 10 mL/min par mélange dans un flux d'air porteur à 300 mL/min. La teneur en chlorure de thionyle est alors divisée par 30. Ce dispositif simple permet d'atteindre des vapeurs en chlorure de thionyle de 1500 ppm à 5 ppb dans l'air. Cependant l'air porteur contient aussi des vapeurs de dichlorométhane en forte concentration estimée à 200ppm. C'est pourquoi les tests présentés ici montrent d'abord l'exposition des capteurs aux vapeurs de dichlorométhane CH₂Cl₂ seul (à t=10min), puis l'exposition des mêmes capteurs aux vapeurs de SOCl₂ + CH₂Cl₂ (à t=45min). Bien que la concentration en dichlorométhane soit très élevée, la réponse est négligeable par rapport à la réponse à 50 ppb de chlorure de thionyle, comme le montre la figure 2.

La détection des vapeurs de chlorure de thionyle est effectuée, comme on l'a déjà dit, par mesure de la variation de résistance entre les électrodes du dispositif. On rappellera que cette résistance est la résistance relative R/R0.

La figure 1 montre les courbes obtenues avec le capteur de l'exemple 1 et avec le capteur de l'exemple 2.

Dans la figure 1, les courbes supérieures montrent l'évolution dans le temps de la résistance du dispositif et les courbes inférieures montrent la dérivée temporelle de la résistance relative R/R0.

La figure 2 montre la variation de résistance des dispositifs des exemples 1 et 2 lorsque le flux d'air auquel ils sont exposés contient 50 ppb de chlorure de thionyle. Les courbes supérieures montrent l'évolution dans le temps de la résistance du dispositif et les courbes inférieures montrent la dérivée temporelle de la résistance relative R/R0.

La résistance aux bornes des électrodes est mesurée toutes les 5 secondes environ en forçant un courant constant de 1,7 mA dans le capteur.

La détection du gaz se fait en mesurant la résistance R puis en traitant le signal de résistance en temps réel soit sous la forme de la résistance relative R ramenée à la résistance initiale RO (courbes supérieures R/R0) soit en en prenant la dérivée temporelle de R/R0 (courbes inférieures).

La seconde méthode donne une détection plus précise et plus quantitative. C'est la raison pour laquelle dans les exemples suivants on utilisera le pic de la dérivée temporelle de R/RO, qui correspond à la vitesse maximum de variation de R au cours du temps, comme mesure de la sensibilité de la rapidité du capteur de l'invention, ce signal étant appelé "pic de détection".

### Exemple 4

Le dispositif de l'exemple 2 a été testé pour la détection du chlorure de thionyle à 17 ppm, 1 ppm, 100 ppb, 50 ppb et 10 ppb. Le chlorure de thionyle est détecté même à une teneur de 10 ppb en 10 à 20 minutes, à une teneur de 50 ppb en moins de 5 minutes. Ces délais sont largement inférieurs aux limites d'exposition AEGL-2 qui sont de 4,3 ppm sur 10 min.

### Exemple 5 (comparatif)

On a procédé comme à l'exemple 2 mais le mélange utilisé pour le dépôt de la couche de sensibilisation contenait de la poly(2-vinylpyridine) et du vinyl benzylalcool à 10 µM chacun et la couche de sensibilisation avait une épaisseur de 4 nm.

### Exemple 6 (comparatif)

On a procédé comme à l'exemple 2 mais la solution utilisée pour déposer la couche de sensibilisation ne contenait que de l'alcool vinyl benzylique (VBA) à une concentration de 1 mM.

### Exemple 7 (comparatif)

On a procédé comme à l'exemple 2 mais la solution utilisée pour déposer la couche de sensibilisation ne contenait que de la poly(2-vinylpyridine) (P2VP).

### Exemple 8

On a exposé les dispositifs des exemples 1, 2, 5, 6 et 7 à un flux d'air contenant environ 200ppm de dichlorométhane.

Les résultats sont représentés en figure 3.

Comme on le voit en figure 3, aucun des dispositifs n'est sensible au dichlorométhane : toutes les courbes sont confondues.

Les capteurs des exemples 1, 2, 5, 6 et 7 ont ensuite été exposés à un flux d'air synthétique contenant 50 ppb de SOCl₂.

Les variations des résistances relatives de ces dispositifs sont montrées en figure 4.

Comme on le voit en figure 4, les dispositifs comprenant une couche constituée de P2VP seulement ou d'une couche trop fine du mélange VBA-P2VP (notée VBA/P2VP 10 µM) donnent une réponse bien plus faible au chlorure de thionyle que les dispositifs comprenant une couche de sensibilisation d'une épaisseur suffisante d'environ 100nm (notée VBA/ P2VP 1 mM).

Le capteur nu de l'exemple 1 ne donne pas de réponse du tout à cette teneur en chlorure de thionyle.

Le capteur pourvu d'une couche ne contenant que du VBA seulement donne une réponse comparable en intensité à celle du capteur P2VP-VBA 1 mM.

Cependant, la réponse du dispositif ne comprenant qu'une couche de VBA n'est pas sélective comme on le verra par l'exemple 11 qui suit.

### Exemple 9

On a fabriqué différents dispositifs selon l'invention comprenant différentes compositions de la couche de sensibilisation en faisant varier la nature du composé A et du composé B.

Ainsi, on a utilisé pour fabriquer la couche de sensibilisation :
- soit un mélange VBA/P2VP,
- soit un mélange de phényl-1-propanol (Ph-1-propanol) et de P2VP,
- un mélange de terpinéol et de P2VP,
- un mélange d'alcool octadécanol et de P2VP,
- un mélange d'alpha-vinyl benzylalcool (VBA) et copolymères de vinyl-pyridine et styrène (P4VP-CO-PS),
- un mélange d'hydroquinone et de P2VP, et
- un mélange de VBA et de polyéthylènimine (PEI).

Tous ces dispositifs ont été fabriqués en déposant un mélange concentré du composé A et du composé B chacun à 1 mM dans du chloroforme.

On a fabriqué deux exemplaires de chaque dispositif.

On a alors mis en contact chacun de ces dispositifs avec un flux d'air synthétique comme décrit à l'exemple 3 contenant 50 ppb de vapeurs de chlorure de thionyle.

La figure 5 représente la hauteur des pics de détection, c'est-à-dire du pic correspondant au maximum de la dérivée temporelle de la résistance ramenée à la résistance initiale, multipliée par 1 000.

Comme on le voit en figure 5, la détection du chlorure de thionyle reste efficace en changeant l'alcool vinylbenzylique (VBA) pour d'autres alcools comme le phényl-1-propanol, terpinéol ou l'octadécanol ou pour des phénols comme l'hydroquinone.

De la même façon, la poly(2-vinylpyridine) peut être remplacée par un copolymère de 4-vinylpyridine et de polystyrène ou par de la polyéthylènimine.

On voit également à partir de la figure 5 que les réponses des deux capteurs identiques sont très proches ce qui montre la robustesse du capteur et du procédé de détection et/ou de quantification de l'invention ainsi que du procédé de fabrication de ces dispositifs de l'invention et la bonne reproductibilité des résultats de détection.

La couche de sensibilisation des dispositifs de l'invention apporte non seulement une bonne sensibilité à la détection du chlorure de thionyle mais encore une bonne sélectivité par rapport à d'autres polluants industriels, ce qui permet l'identification des vapeurs du chlorure de thionyle.

On a vu à partir des exemples précédents que les dispositifs de l'invention répondent de façon négligeable au dichlorométhane même à des teneurs élevées.

### Exemple 10

On a également testé les dispositifs des exemples 1, 2, 5, 6 et 7 à de l'air synthétique comprenant 1 ppm de Cl₂ ainsi qu'à de l'air synthétique comprenant 1 ppm d'acide chlorydrique.

Le dichlore (Cl₂) et l'acide chlorydrique sont deux gaz industriels chlorés volatiles.

Les résultats sont représentés en figure 6.

La figure 6 montre la hauteur des pics de détection (maximum de la dérivée temporelle de la résistante ramenée à la résistance initiale, ici multipliée par 1 000) pour la détection de 50 ppb de SOCl₂ dans l'air synthétique (barre hachurée), la détection de 1 ppm de Cl₂ dans de l'azote (barre noire) et la détection de 1 ppm de HCl dans l'azote (barre blanche).

Comme on le voit à partir de la figure 6, le dispositif de l'invention (celui de l'exemple 2) ne répond pas à la présence de 1 ppm de dichlore et à celle de 1 ppm d'acide chlorydrique.

### Exemple comparatif 11

La réponse à l'exposition au dichlore (Cl₂) d'un dispositif selon l'invention mais comprenant une couche de sensibilisation constituée uniquement de polyéthylènimine (PEI) seule a été mesurée. Les résultats sont présentés en figure 7.

La figure 7 montre la résistance relative du dispositif (résistance ramenée à la résistance initiale) lors de son exposition à de l'azote contenant du Cl₂ à une teneur de 1ppm, 100ppb et 27ppb.

Comme on le voit à la figure 7, ce dispositif avec couche de sensibilisation constituée de PEI seulement répond très fortement au dichlore. Il ne peut donc pas constituer un détecteur sélectif de SOCl₂.

Bien que dans les exemples qui précèdent, la couche de sensibilisation ait été déposée sur les électrodes et le matériau conducteur ou semiconducteur, elle peut aussi être déposée uniquement sur le matériau conducteur ou semi-conducteur et/ou sur une seule électrode.

La couche de sensibilisation peut être déposée sur au moins une électrode et/ou sur le matériau conducteur ou semi-conducteur ou sur tout autre dispositif de détection chimique en phase gaz ou en phase liquide afin de le rendre sensible et sélectif au chlorure de thionyle. Ces dispositifs peuvent être des capteurs résistifs, des semi-conducteurs, ou graphènes, des capteurs capacitifs, des microbalances à quartz, des capteurs à transistor à nanotubes de carbone ou graphènes ou nanofils de matériaux semi-conducteurs par exemple.

Le dispositif et le procédé de fabrication de ce dispositif peuvent être utilisés pour la réalisation de capteurs de gaz sensibles, sélectifs et bon marché pour la détection des vapeurs toxiques du réactif industriel chlorure de thionyle. Ce type de détecteur trouvera un usage dans la surveillance des zones de travail où le chlorure de thionyle est manipulé, aux abords des zones de stockage et des circuits de distribution ou de transport, dans les unités de fabrication des piles et batteries Li-SOCl₂, leurs zones de stockage, pour la surveillance régulière de l'état de conservation des piles et batteries Li-SOCl₂ en usage, par exemple.

Ils peuvent également être utilisés pour la réalisation de capteurs de gaz isolés ou entrant dans la composition de multicapteurs pouvant détecter et identifier des vapeurs toxiques en milieu industriel ou dans les transports, Grâce à la simplicité de mise en oeuvre du dispositif, le multicapteur pourrait être suffisamment léger et bon marché pour équiper les pompiers, les personnels industriels travaillant en milieu exposé, les inspecteurs du travail, les fantassins etc.

Ils peuvent aussi être utilisés pour la réalisation de capteurs de chlorure de thionyle en phase gazeuse ou liquide, pour le suivi in situ ou post-production de la concentration en chlorure de thionyle dans les réacteurs chimiques industriels, leurs produits ou leurs effluents, ou pour la détection de traces de SOCl₂ dans les réactions chimiques pouvant en dégager comme sous-produit.

## Revendications

1. Dispositif de détection et/ou de quantification du chlorure de thionyle (SOCl₂) comprenant au moins deux électrodes et une couche en un matériau conducteur ou semi-conducteur **caractérisé en ce qu'**il comprend de plus une couche de sensibilisation, comprenant un mélange d'au moins un premier composé A ayant une fonction hydroxyle et d'au moins un second composé B ayant une fonction amine, déposée sur au moins une des électrodes et/ou sur le matériau conducteur ou semi-conducteur, cette dite couche de sensibilisation ayant une épaisseur comprise entre 10 nm et 100 µm, de préférence une épaisseur égale à 100 nm.

2. Dispositif selon la revendication 1, **caractérisé en ce que** le rapport molaire composé A/composé B est compris entre 0,1 et 10 inclus, de préférence est égal à 1.

3. Dispositif selon la revendication 1 ou 2, **caractérisé en ce que** le composé A est choisi parmi les alcools primaires, de préférence le n-octadécanol; les alcools secondaires, de préférence l'alpha-vinyl benzylalcool (VBA), ou le phényl-1-propanol; les alcools tertiaires, de préférence le terpinéol; les phénols, de préférence l'hydroquinone.

4. Dispositif selon l'une quelconque des revendications précédentes, **caractérisé en ce que** le second composé B est choisi parmi les polymères à fonction amine, de préférence la poly(2-vinylpyridine) (P2VP), la poly(4-vinylpyridine), les copolymères de vinyl-pyridine et styrène, la poly(éthylène imine).

5. Dispositif selon l'une quelconque des revendications précédentes, **caractérisé en ce que** le matériau conducteur ou semi-conducteur est choisi parmi les matériaux à base de carbone, silicium, germanium, zinc, gallium, indium, cadmium et les matériaux semi-conducteurs organiques, de préférence le matériau est constitué de nanotubes de carbone, plus préférablement de nanotubes de carbone multiparois.

6. Dispositif selon l'une quelconque des revendications précédentes, **caractérisé en ce que** le matériau des électrodes est choisi parmi l'or, l'argent, le palladium, le platine, le titane, le silicium dopé, le cuivre et le nickel, de préférence les électrodes sont en or.

7. Procédé de détection et/ou de quantification du chlorure de thionyle, **caractérisé en ce qu'**il comprend une étape de mise en présence de l'échantillon à tester sous forme liquide ou sous forme gazeuse avec un dispositif de détection et/ou de quantification selon l'une quelconque des revendications 1 à 6, et une étape de mesure de la résistance, de la conductance, de la transconductance, de l'impédance et/ou de la capacité dudit dispositif.

8. Procédé de fabrication d'un dispositif de détection et/ou de quantification du chlorure de thionyle comprenant au moins deux électrodes et une couche en un matériau conducteur ou semi-conducteur, **caractérisé en ce qu'**il comprend les étapes suivantes :
a) mélange d'au moins un composé A ayant une fonction hydroxyle et d'au moins un second composé B ayant une fonction amine,
b) dépôt du mélange obtenu à l'étape a) sur la surface de l'une des électrodes et/ou sur la couche du matériau conducteur ou semi-conducteur pour former une couche de sensibilisation ayant une épaisseur comprise entre 10 nm et 100 µm, de préférence une épaisseur égale à 100 nm, et
c) séchage de la couche obtenue à l'étape b).

9. Procédé selon la revendication 8, **caractérisé en ce que** dans le mélange de l'étape a), le rapport molaire composé A/composé B est compris entre 0,1 et 10 inclus, de préférence est égal à 1.

10. Procédé selon la revendication 8 ou 9, **caractérisé en ce qu'**à l'étape a), le premier composé A est choisi parmi les alcools primaires, de préférence le n-octadécanol; les alcools secondaires, de préférence l'alpha-vinyl benzylalcool (VBA), ou le phényl-1-propanol; les alcools tertiaires, de préférence le terpinéol; les phénols, de préférence l'hydroquinone.

11. Procédé selon l'une quelconque des revendications 8 à 10, **caractérisé en ce qu'**à l'étape a), le second composé B est choisi parmi les polymères à fonction amine, de préférence la poly(2-vinylpyridine) (P2VP), la poly(4-vinylpyridine); les copolymères de vinyl-pyridine et styrène; la poly(éthylène imine).

12. Procédé selon l'une quelconque des revendications 8 à 11, **caractérisé en ce que** le matériau conducteur ou semi-conducteur est choisi parmi les matériaux à base de carbone, silicium, germanium, zinc, gallium, indium, cadmium et les matériaux semi-conducteurs organiques, de préférence le matériau est constitué de nanotubes de carbone, plus préférablement de nanotubes de carbone multiparois.

13. Procédé selon l'une quelconque des revendications 8 à 12, **caractérisé en ce que** le matériau des électrodes est choisi parmi l'or, l'argent, le palladium, le platine, le titane, le silicium dopé, le cuivre et le nickel, de préférence les électrodes sont en or.

14. Procédé selon l'une quelconque des revendications 8 à 13, **caractérisé en ce qu'**à l'étape a) le mélange du au moins un composé A et du au moins un composé B est effectué dans un solvant, de préférence le chloroforme.

15. Procédé selon l'une quelconque des revendications 8 à 14, **caractérisé en ce que** le dépôt de l'étape b) est effectué par enduction, trempage, gouttage ou par évaporation.

16. Procédé selon l'une quelconque des revendications 8 à 15, **caractérisé en ce qu'**il comprend de plus une étape d) de lavage de la couche obtenue à l'étape c), suivie d'une étape e) de recuit entre 40°C et 300°C, préférablement à 100°C pendant 1 seconde à 1 heure, préférablement 5 minutes de la couche obtenue à l'étape d).

## Patentansprüche

1. Vorrichtung zum Nachweis und/oder zur Quantifizierung von Thionylchlorid (SOCl₂), umfassend mindestens zwei Elektroden und eine Schicht aus einem leitenden oder halbleitenden Material, **dadurch gekennzeichnet, dass** sie zudem eine Sensibilisierungsschicht umfasst, die eine Mischung aus mindestens einer ersten Verbindung A, die eine Hydroxylfunktion aufweist, und mindestens einer zweiten Verbindung B, die eine Aminfunktion aufweist, umfasst, die auf mindestens einer der Elektroden und/oder auf dem leitenden oder halbleitenden Material abgelagert ist, wobei diese sogenannte Sensibilisierungsschicht eine Dicke zwischen 10 nm und 100 µm, vorzugsweise eine Dicke gleich 100 nm aufweist.

2. Vorrichtung nach Anspruch 1, **dadurch gekennzeichnet, dass** das Molverhältnis Verbindung A / Verbindung B zwischen 0,1 und einschließlich 10, vorzugsweise gleich 1 ist.

3. Vorrichtung nach Anspruch 1 oder 2, **dadurch gekennzeichnet, dass** die Verbindung A ausgewählt ist aus den primären Alkoholen, vorzugsweise n-Octadecanol; den sekundären Alkoholen, vorzugsweise Alpha-vinylbenzylalkohol (VBA) oder Phenyl-1-propanol; den tertiären Alkoholen, vorzugsweise Terpineol; den Phenolen, vorzugsweise Hydrochinon.

4. Vorrichtung nach einem der vorstehenden Ansprüche, **dadurch gekennzeichnet, dass** die zweite Verbindung B ausgewählt ist aus den Polymeren mit Aminfunktion, vorzugsweise Poly(2-vinylpyridin) (P2VP), Poly(4-vinylpyridin), den Vinylpyridin- und Styren-Copolymeren, Poly(ethylenimin).

5. Vorrichtung nach einem der vorstehenden Ansprüche, **dadurch gekennzeichnet, dass** das leitende oder halbleitende Material ausgewählt ist aus den Materialien auf Basis von Kohlenstoff, Silizium, Germanium, Zink, Gallium, Indium, Cadmium und den organischen halbleitenden Materialien, vorzugsweise besteht das Material aus Kohlenstoffnanoröhren, bevorzugter aus mehrwandigen Kohlenstoffnanoröhren.

6. Vorrichtung nach einem der vorstehenden Ansprüche, **dadurch gekennzeichnet, dass** das Material der Elektroden ausgewählt ist aus Gold, Silber, Palladium, Platin, Titan, dotiertem Silizium, Kupfer und Nickel, vorzugsweise sind die Elektroden aus Gold.

7. Verfahren zum Nachweis und/oder zur Quantifizierung des Thionylchlorids, **dadurch gekennzeichnet, dass** es einen Schritt des Inkontaktbringens der zu testenden Probe in flüssiger Form oder gasartiger Form mit einer Vorrichtung zum Nachweis und/oder zur Quantifizierung nach einem der Ansprüche 1 bis 6 und einen Schritt des Messens des Widerstands, der Konduktanz, der Transkonduktanz, der Impedanz und/oder der Kapazität der Vorrichtung umfasst.

8. Verfahren zur Herstellung einer Vorrichtung zum Nachweis und/oder zur Quantifizierung des Thionylchlorids, umfassend mindestens zwei Elektroden und eine Schicht aus einem leitenden oder halbleitenden Material, **dadurch gekennzeichnet, dass** es die folgenden Schritte umfasst:
a) Mischung mindestens einer Verbindung A, die eine Hydroxylfunktion aufweist, und mindestens einer zweiten Verbindung B, die eine Aminfunktion aufweist,
b) Ablagerung der im Schritt a) erhaltenen Mischung auf der Oberfläche der einen der Elektroden und/oder auf der Schicht des leitenden oder halbleitenden Materials, um eine Sensibilisierungsschicht zu bilden, die eine Dicke zwischen 10 nm und 100 µm, vorzugsweise eine Dicke gleich 100 nm aufweist, und
c) Trocknen der im Schritt b) erhaltenen Schicht.

9. Verfahren nach Anspruch 8, **dadurch gekennzeichnet, dass** in der Mischung des Schritts a) das Molverhältnis Verbindung A / Verbindung B zwischen 0,1 und einschließlich 10, vorzugsweise gleich 1 ist.

10. Verfahren nach Anspruch 8 oder 9, **dadurch gekennzeichnet, dass** im Schritt a) die erste Verbindung A ausgewählt ist aus den primären Alkoholen, vorzugsweise n-Octadecanol; den sekundären Alkoholen, vorzugsweise Alpha-vinylbenzylalkohol (VBA) oder Phenyl-1-propanol; den tertiären Alkoholen, vorzugsweise Terpineol; den Phenolen, vorzugsweise Hydrochinon.

11. Verfahren nach einem der Ansprüche 8 bis 10, **dadurch gekennzeichnet, dass** im Schritt a) die zweite Verbindung B ausgewählt ist aus den Polymeren mit Aminfunktion, vorzugsweise Poly(2-vinylpyridin) (P2VP), Poly(4-vinylpyridin); den Vinylpyridin- und Styren-Copolymeren; Poly(ethylenimin).

12. Verfahren nach einem der Ansprüche 8 bis 11, **dadurch gekennzeichnet, dass** das leitende oder halbleitende Material ausgewählt ist aus den Materialien auf Basis von Kohlenstoff, Silizium, Germanium, Zink, Gallium, Indium, Cadmium und den organischen halbleitenden Materialien, vorzugsweise besteht das Material aus Kohlenstoffnanoröhren, bevorzugter aus mehrwandigen Kohlenstoffnanoröhren.

13. Verfahren nach einem der Ansprüche 8 bis 12, **dadurch gekennzeichnet, dass** das Material der Elektroden ausgewählt ist aus Gold, Silber, Palladium, Platin, Titan, dotiertem Silizium, Kupfer und Nickel, vorzugsweise sind die Elektroden aus Gold.

14. Verfahren nach einem der Ansprüche 8 bis 13, **dadurch gekennzeichnet, dass** im Schritt a) die Mischung der mindestens einen Verbindung A und der mindestens einen Verbindung B in einem Lösungsmittel, vorzugsweise Chloroform, durchgeführt wird.

15. Verfahren nach einem der Ansprüche 8 bis 14, **dadurch gekennzeichnet, dass** die Ablagerung des Schrittes b) durch Beschichtung, Tauchen, Tropfen oder durch Evaporation durchgeführt wird.

16. Verfahren nach einem der Ansprüche 8 bis 15, **dadurch gekennzeichnet, dass** es zudem einen Schritt d) des Reinigens der im Schritt c) erhaltenen Schicht, gefolgt von einem Schritt e) des Glühens zwischen 40 °C und 300 °C, vorzugsweise bei 100 °C während 1 Sekunde bis 1 Stunde, vorzugsweise 5 Minuten, der im Schritt d) erhaltenen Schicht umfasst.

## Claims

1. Device for detecting and/or quantifying thionyl chloride (SOCl₂) comprising at least two electrodes and one layer made of a conductive or semi-conductive material **characterised in that** it further comprises a sensitisation layer, comprising a mixture of at least one first compound A having a hydroxyl function and of at least one second compound B having an amine function, deposited on at least one of the electrodes and/or on the conductive or semi-conductive material, said sensitisation layer having a thickness between 10nm and 100µm, preferably a thickness equal to 100nm.

2. Device according to claim 1, **characterised in that** the compound A/compound B molar ratio is between 0.1 and 10 inclusive, preferably is equal to 1.

3. Device according to claim 1 or 2, **characterised in that** the compound A is selected from among primary alcohols, preferably n-octadecanol; secondary alcohols, preferably vinylbenzyl alcohol (VBA), or phenyl-1-propanol; tertiary alcohols, preferably terpineol; phenols, preferably hydroquinone.

4. Device according to any one of the preceding claims, **characterised in that** the second compound B is selected from among amine functional polymers, preferably poly(2-vinylpyridine) (P2VP), poly(4-vinylpyridine), copolymers of vinyl-pyridine and styrene, poly(ethylene imine),

5. Device according to any one of the preceding claims, **characterised in that** the conductive or semi-conductive material is selected from among materials with a base of carbon, silicon, germanium, zinc, gallium, indium, cadmium and organic semi-conductor materials, preferably the material is formed from carbon nanotubes, more preferably multi-wall carbon nanotubes,

6. Device according to any one of the preceding claims, **characterised in that** the material of the electrodes is selected among gold, silver, palladium, platinum, titanium, doped silicon, copper and nickel, preferably the electrodes are made of gold.

7. Method for detecting and/or quantifying thionyl chloride, **characterised in that** it comprises a step of putting the sample to be tested in liquid form or in gaseous form in the presence of a device for detecting and/or quantifying according to any one of claims 1 to 6, and a step of measuring the resistance, the conductance, the transconductance, the impedance and/or the capacity of said device.

8. Method for manufacturing a device for detecting and/or quantifying thionyl chloride comprising at least two electrodes and one layer made from a conductive or semi-conductive material, **characterised in that** it comprises the following steps:
a) mixing of at least one compound A having a hydroxyl function and of at least one second compound B having an amine function,
b) deposition of the mixture obtained in step a) on the surface of one of the electrodes and/or on the layer of conductive or semi-conductive material in order to form a sensitisation layer having a thickness between 10nm and 100µm, preferably a thickness equal to 100nm, and
c) drying of the layer obtained in step b).

9. Method according to claim 8, **characterised in that** in the mixture of step a), the compound A/compound B molar ratio is between 0.1 and 10 inclusive, preferably is equal to 1.

10. Method according to claim 8 or 9, **characterised in that** in step a), the first compound A is selected among primary alcohols, preferably n-octadecanol; secondary alcohols, preferably vinylbenzyl alcohol (VBA), or phenyl-1-propanol; tertiary alcohols, preferably terpineol; phenols, preferably hydroquinone.

11. Method according to any one of claims 8 to 10, **characterised in that** in step a), the second compound B is selected among amine functional polymers, preferably poly(2-vinylpyridine) (P2VP), poly(4-vinylpyridine); copolymers of vinyl-pyridine and styrene; poly(ethylene imine).

12. Method according to any one of claims 8 to 11, **characterised in that** the conductive or semi-conductive material is selected among materials with a base of carbon, silicon, germanium, zinc, gallium, indium, cadmium and organic semi-conductor materials, preferably the material is formed from carbon nanotubes, more preferably multi-wall carbon nanotubes.

13. Method according to any one of claims 8 to 12, **characterised in that** the material of the electrodes is selected among gold, silver, palladium, platinum, titanium, doped silicon, copper and nickel, preferably the electrodes are made of gold.

14. Method according to any one of claims 8 to 13, **characterised in that** in step a) the mixture of the at least one compound A and of the at least one compound B is carried out in a solvent, preferably chloroform.

15. Method according to any one of claims 8 to 14, **characterised in that** the deposition of step b) is carried out by coating, soaking, dripping or by evaporation.

16. Method according to any one of claims 8 to 15, **characterised in that** it further comprises a step d) of washing the layer obtained in step c), followed by a step e) of annealing between 40 °C and 300 °C, preferably at 100 °C for 1 second to 1 hour, preferably 5 minutes of the layer obtained in step d).
